# EUROPÄISCHE PATENTSCHRIFT

(11) **EP 3 710 319 B1**
(45) Veröffentlichungstag und Bekanntmachung des Hinweises auf die Patenterteilung: **24.01.2024**
(21) Anmeldenummer: 17797942.4
(22) Anmeldetag: 14.11.2017
(51) Int. Cl.: B60S 3/00

(54) **FAHRZEUGWASCHANLAGE**
VEHICLE WASHING FACILITY
INSTALLATION DE LAVAGE DE VÉHICULES

(43) Veröffentlichungstag der Anmeldung: 23.09.2020
(73) Patentinhaber: Alfred Kärcher SE & Co. KG, 71364 Winnenden (DE)
(72) Erfinder: WENZEL, Karl, Engelbert, 73663 Berglen (DE); KUTZ, Benjamin, 74372 Sersheim (DE); HEINZE, Michael, 71282 Hemmingen (DE)
(74) Vertreter: DTS Patent- und Rechtsanwälte Schnekenbühl und Partner mbB
(86) Internationale Anmeldenummer: PCT/EP2017/079204
(87) Internationale Veröffentlichungsnummer: WO 2019/096373

(56) Entgegenhaltungen:
- EP-A2- 2 082 930
- WO-A1-99/61295
- WO-A1-2010/118908
- DE-U1-202013 103 562

## Beschreibung

Die Erfindung betrifft eine Fahrzeugwaschanlage, umfassend einen Einfahrbereich für ein zu waschendes Fahrzeug, eine Kameraeinrichtung mit einem auf den Einfahrbereich gerichteten Sichtfeld, eine Recheneinheit und eine Hinweiseinrichtung zum Bereitstellen eines Hinweises für einen Fahrzeugführer abhängig von mindestens einem mit der Kameraeinrichtung erstellten Bild, wobei die Fahrzeugwaschanlage ein Portal aufweist.

Bei einer derartigen Fahrzeugwaschanlage kann einem Fahrzeugführer ein Hinweis bereitgestellt werden, um das Fahrzeug für den durchzuführenden Waschvorgang so am Einfahrbereich zu positionieren, dass das Fahrzeug von Waschwerkzeugen allseits gut erreicht und abgereinigt werden kann.

Eine Fahrzeugwaschanlage ist beispielsweise in der EP 2 280 852 B1 beschrieben. Dabei kommt eine an einer Decke der die Fahrzeugwaschanlage aufnehmenden Waschhalle angebrachte Kameraeinrichtung zum Einsatz. Aus der Vogelperspektive werden das Fahrzeug und der Einfahrbereich aufgenommen, und ein entsprechendes Bild kann dem Fahrzeugführer an einer Anzeigeeinrichtung dargestellt werden. Nachteilig ist es dabei, dass der Einfahrbereich durch das Fahrzeug zum Teil verdeckt sein kann. Dies macht es erforderlich, eine Stereokameraeinrichtung mit zwei Kameras einzusetzen, um ansonsten verdeckte Bereiche erfassen zu können. Der Konstruktions- und Rechenaufwand zum Aufnehmen und Darstellen der Bilder, abgesehen von den Kosten für die zweite Kamera, wird dadurch unerwünschterweise erhöht. Nachteilig ist auch die Montage der Kameraeinrichtung an der Decke der Waschhalle, womit ein hoher Aufwand an Verkabelung verbunden ist. Die Kameraeinrichtung ist durch die Deckenmontage erheblicher Verschmutzung ausgesetzt, eine Reinigung ist jedoch zugleich erschwert.

Die DE 298 21 066 U1 beschreibt eine Vorrichtung zur Positionierung von Kraftfahrzeugen vor Fahrzeugwaschanlagen. Dabei werden zu beiden Seiten des Einfahrbereiches in einer jeweiligen Ebene liegende Lichtsignale emittiert und detektiert, ob ein Fahrzeugteil in die Ebene hineinragt und das Lichtsignal unterbricht.

Eine Einfahrhilfe für einen Fahrzeugführer in eine Fahrzeugwaschanlage ist in der DE 298 09 426 U1 beschrieben. Dabei wird eine optisch sichtbare Leitlinie auf die Mitte des Einfahrbereiches projiziert.

In der gattungsgemäßen DE 20 2013 103 562 U1 ist eine Fahrzeugwaschanlage beschrieben, die eine Kameraeinrichtung umfasst, unter deren Nutzung eine Positionsbestimmung eines einfahrenden Fahrzeuges vorgenommen wird. Die Kameraeinrichtung ist oben mittig an einem Portal der Fahrzeugwaschanlage angeordnet. Ein Messstrahl deckt den Raum über, vor und hinter einem Waschbereich der Fahrzeugwaschanlage ab, um das Fahrzeug in der Längsrichtung zu lokalisieren. Dem Fahrzeugführer werden Einfahrhinweise abhängig von einem Signal der Kameraeinrichtung bereitgestellt. Die Kameraeinrichtung kann eine Bilderkennungskamera oder eine PMD-Kamera sein.

Die EP 2 082 930 A2 beschreibt eine Autowaschanlage mit mindestens einem Behandlungsaggregat und mit einer Erfassungseinrichtung zum dreidimensionalen Abtasten und Erfassen der Fahrzeugoberfläche mittels mindestens einer Bilderfassungseinrichtung mit integrierter Entfernungsmesseinrichtung sowie einer Sensoranordnung und einer zugeordneten Lichtquelle, die moduliertes Licht emittiert.

Aufgabe der vorliegenden Erfindung ist es, eine gattungsgemäße Fahrzeugwaschanlage bereitzustellen, mit der die korrekte Positionierung des Fahrzeuges relativ zum Einfahrbereich unter einfacher Konstruktion sichergestellt werden kann.

Diese Aufgabe wird bei einer Fahrzeugwaschanlage der eingangs genannten Art erfindungsgemäß dadurch gelöst, dass die Kameraeinrichtung an einer Portalsäule des Portals seitlich bezüglich dem Einfahrbereich versetzt positioniert ist, wobei das Sichtfeld von der Seite auf den Einfahrbereich gerichtet ist, und dass die Hinweiseinrichtung eine Anzeigeeinrichtung ist oder umfasst, an der mittels der Kameraeinrichtung erstellte Bilder von der Recheneinheit verändert darstellbar sind, wobei die Veränderung eine Darstellung des Bildinhaltes der Bilder mit veränderter Perspektive und/oder eine in Quer- und/oder in Längsrichtung des Einfahrbereiches gespiegelte Darstellung des Bildinhaltes umfasst.

Die erfindungsgemäße Fahrzeugwaschanlage umfasst ein Portal. Am Portal können beispielsweise Waschwerkzeuge gehalten sein, zum Beispiel Karosseriebürsten und eine Düseneinrichtung zur Beaufschlagung des Fahrzeugs mit einer Reinigungsflüssigkeit. An einer Portalsäule, worunter im vorliegenden Fall insbesondere ein sich in Höhenrichtung erstreckender Träger des Portals verstanden werden kann, ist die Kameraeinrichtung positioniert. Eine gesonderte Montage der Kameraeinrichtung an einem separaten Gerüst oder, wie im Falle der EP 2 280 852 B1, an der Decke der Waschhalle, kann dadurch vermieden werden. Der Aufwand an Verkabelung lässt sich dadurch erheblich reduzieren, wodurch Herstellungskosten eingespart werden können. Im Gegensatz zu der in der EP 2 280 852 B1 vorgeschlagenen Lösung kann die Kameraeinrichtung an der Portalsäule außerdem einfacher erreicht und gereinigt werden. Die Qualität der Erfassung des Fahrzeugs lässt sich auf diese Weise steigern. Es fällt leichter, das Fahrzeug in korrekter Sollposition am Einfahrbereich zu positionieren. Durch Anordnung an der Portalsäule ist die Kameraeinrichtung seitlich versetzt bezüglich einer Mitte des Einfahrbereiches angeordnet, bezogen auf eine Querrichtung, insbesondere seitlich neben dem Einfahrbereich. Das Sichtfeld der Kameraeinrichtung ist insbesondere, bezogen auf die Querrichtung, von der Seite auf den Einfahrbereich gerichtet, zum Beispiel schräg von vorne bezüglich einer Einfahrrichtung in den Einfahrbereich. Dabei besteht insbesondere die Möglichkeit, den Einfahrbereich und eine seitliche Begrenzung desselben vom Sichtfeld der Kamera ebenso zu erfassen wie Front- und Seitenflächen des Fahrzeugs. Anders als bei der in der EP 2 280 852 B1 beschriebenen Lösung kann eine Verdeckung des Sichtfeldes insbesondere in den für die korrekte Positionierung des Fahrzeuges interessanten Bereichen vermieden werden. Der kostspielige Einsatz einer Stereokameraeinrichtung ist nicht erforderlich.

Die erfindungsgemäße Fahrzeugwaschanlage kann eine Portalwaschanlage sein, bei der das Portal relativ zu einem stationären Fahrzeug bewegt wird. Alternativ kann die Fahrzeugwaschanlage eine Waschstraße sein, bei der das Fahrzeug mittels einer Fördereinrichtung relativ zum Portal bewegt wird.

Vorzugsweise ist am Portal mindestens ein Waschwerkzeug gehalten, zum Beispiel eine Karosseriebürste oder eine Düseneinrichtung. Gesonderte Halterungen können eingespart werden, und der Aufwand an Verkabelung kann reduziert werden.

Die Hinweiseinrichtung ist oder umfasst gemäß der Erfindung eine Anzeigeeinrichtung. Die Anzeigeeinrichtung umfasst insbesondere eine Bildanzeige zur Darstellung von Bildern und speziell Bildfolgen der Kameraeinrichtung.

An der Anzeigeeinrichtung werden mittels der Kameraeinrichtung erstellte Bilder von der Recheneinheit verändert dargestellt. Bilddaten werden von der Kameraeinrichtung an die mit dieser gekoppelte Recheneinheit übermittelt und verändert. Die Veränderung kann eine Analyse oder Auswertung der Bilddaten umfassen und die Anzeige darauf basierender Informationen an der Anzeigeeinrichtung.

Die Veränderung umfasst eine Darstellung des Bildinhaltes der Bilder mit veränderter Perspektive. Aufgrund dessen, dass das Sichtfeld der Kameraeinrichtung durch deren seitliche Positionierung insbesondere schräg von vorne auf den Einfahrbereich gerichtet ist, kann die Wahrnehmung des Bildinhaltes für den Fahrzeugführer erschwert sein. Mit der Recheneinheit kann der Bildinhalt so verändert werden, dass der Fahrzeugführer ein Bild angezeigt bekommt, welches bei Ausrichtung einer optischen Achse der Kameraeinrichtung parallel zur oder längs der Einfahrrichtung entstünde. Dieses Bild kann vom Fahrzeugführer intuitiver erfasst werden, um zu erkennen, ob das Fahrzeug in korrekter Weise am Einfahrbereich positioniert ist. Beispielsweise wird das Fahrzeug von vorne dargestellt, jedoch zum Beispiel nicht in einer Frontansicht.

Vorteilhafterweise kann die Perspektive derart gewählt werden, dass seitliche Begrenzungen des Einfahrbereiches im Wesentlich parallel zu Seitenrändern der Anzeigeeinrichtung und/oder im Wesentlichen symmetrisch zueinander an der Anzeigeeinrichtung dargestellt werden. Auf diese Weise kann das Bild vom Fahrzeugführer besonders gut erfasst werden, so dass die Positionierung des Fahrzeugs auf einfache Weise überprüft werden kann.

Alternativ oder ergänzend zur Darstellung des Bildinhaltes der Bilder mit veränderter Perspektive umfasst die vorstehend erwähnte Veränderung eine in Querrichtung und/oder in Längsrichtung des Einfahrbereiches gespiegelte Darstellung des Bildinhaltes. Diese Darstellung kann dem Fahrzeugführer die Kontrolle erleichtern, ob das Fahrzeug in korrekter Weise am Einfahrbereich positioniert ist. Etwaige Korrekturen durch Lenkbewegungen werden dem Fahrzeugführer vereinfacht. Dies gilt insbesondere bei einer Spiegelung des Bildinhaltes in Querrichtung (zum Beispiel an einer mittig in Längsrichtung des Einfahrbereiches verlaufenden Spiegelebene). Eine seitenverkehrte Darstellung infolge der vom Portal in Richtung des Einfahrbereiches gerichteten Kameraeinrichtung wird korrigiert. Lenkbewegungen des Fahrzeugführers erscheinen an der Anzeigeeinrichtung in der Richtung, in der sie ausgeführt werden.

Als vorteilhaft erweist es sich, wenn der Einfahrbereich von seitlichen, quer zu einer Einfahrrichtung voneinander beabstandeten Begrenzungen begrenzt ist und wenn mit dem Sichtfeld zumindest die der Kameraeinrichtung näher gelegene Begrenzung des Einfahrbereiches zumindest abschnittsweise erfassbar ist. Die Begrenzungen können physisch ausgestaltet sein, beispielsweise sind oder umfassen die Begrenzungen Radleitschienen für das Fahrzeug. Alternativ oder ergänzend können Begrenzungen nicht-physisch sein. Die Begrenzungen können eine Markierung oder Hervorhebung, zum Beispiel farbig, aufweisen, damit der Fahrzeugführer diese besser wahrnehmen kann. Die vorzugsweise erkennbaren Begrenzungen erleichtern es dem Fahrzeugführer, sich beim Einfahren des Fahrzeugs in den Einfahrbereich zu orientieren, um eine zumindest einigermaßen korrekte Positionierung des Fahrzeuges sicherzustellen. Beim Verfahren des Portals relativ zum Fahrzeug kann deren Kollision vermieden werden, wenn das Fahrzeug in Querrichtung innerhalb der Begrenzungen positioniert ist. Zumindest die der Kameraeinrichtung näher gelegene Begrenzung und beispielsweise Radleitschiene kann vom Sichtfeld erfasst werden. Dies gibt insbesondere die Möglichkeit sicherzustellen, dass das Fahrzeug zwischen den Begrenzungen positioniert ist oder nicht zu nah an der Begrenzung angeordnet ist.

Selbst dann, wenn mit dem Sichtfeld der Kamera nur eine seitliche Begrenzung und ein Teil des Fahrzeugs erfasst werden können, kann die Recheneinheit der Fahrzeugwaschanlage bei einer bevorzugten Ausführungsform durch Analyse von der Kameraeinrichtung aufgenommener Bilder dennoch feststellen, ob das Fahrzeug im Wesentlichen mittig zwischen den Begrenzungen positioniert ist. Dabei kann die Recheneinheit insbesondere berücksichtigen, dass das Fahrzeug üblicherweise hinsichtlich Karosserie und Abmessungen in Querrichtung symmetrisch aufgebaut ist. Dies gibt die Möglichkeit, die Lage der von der Kameraeinrichtung nicht erfassten Seitenfläche des Fahrzeuges relativ zum Einfahrbereich zu bestimmen, woraus die Positionierung des Fahrzeugs in Querrichtung ermittelt werden kann.

Bei einer konstruktiv einfachen Ausgestaltung kann die Kameraeinrichtung eine Monokamera sein oder umfassen.

Mittels der Kameraeinrichtung können vorzugsweise digitale Bilder des Einfahrbereiches aufgenommen werden. Vorteilhafterweise ist die Kameraeinrichtung insbesondere zum Erstellen bewegter Bilder ausgestaltet. Die Kameraeinrichtung kann eine Videokamera sein oder umfassen, mit der Bildfolgen beim Befahren des Einfahrbereiches mit dem Fahrzeug erstellt und vorteilhafterweise an der Anzeigeeinrichtung angezeigt werden können. Dabei ist vorzugsweise eine Darstellung der Bilder in Echtzeit möglich.

Alternativ oder ergänzend kann die Veränderung beispielsweise eine Darstellung einer vom Fahrzeugführer wahrnehmbaren Markierung im Bild umfassen. Die mindestens eine Markierung kann am Bild eines physischen Merkmals eingeblendet werden und/oder an einer beliebigen Position im Bild, keinem physischen Merkmal entsprechend. Insbesondere können eine vordere Begrenzung und/oder seitliche Begrenzungen des Einfahrbereiches mit mindestens einer Markierung vorgesehen sein. Beispielsweise wird eine Radleitschiene als Begrenzung des Einfahrbereiches mit einer für den Fahrzeugführer gut zu erkennenden Markierung versehen. Der Fahrzeugführer kann anhand des Bildes des Fahrzeugs feststellen, ob dieses einen zu geringen oder zu großen Abstand von der Radleitschiene aufweist oder diese gar "überfahren" wurde. Denkbar ist alternativ oder ergänzend die Darstellung einer Markierung der vorderen Begrenzung, etwa in Gestalt einer Stopplinie quer zur Einfahrrichtung im Bild des Einfahrbereiches.

Alternativ oder ergänzend kann die Veränderung beispielsweise eine Darstellung des Einfahrbereiches und/oder des Fahrzeuges oder dessen Kontur von oben zwischen Begrenzungen des Einfahrbereiches umfassen, zum Beispiel Radleitschienen. Dies entspricht ebenfalls einer Darstellung des Bildinhaltes mit veränderter Perspektive. Aufgrund der geometrischen Beziehung der Kameraeinrichtung relativ zum Einfahrbereich, die der Recheneinheit bekannt ist, kann diese den Einfahrbereich in Vogelperspektive darstellen. Vom Sichtfeld möglicherweise nicht erfasste Abschnitte des Einfahrbereiches können unter Berücksichtigung der Geometrie des Einfahrbereiches von der Recheneinheit ergänzt und im Bild ebenfalls dargestellt werden. Das Fahrzeug oder dessen Kontur kann vorzugsweise wie vorstehend erläutert unter der Annahme einer symmetrischen Ausgestaltung ergänzt werden. Die Darstellung von oben ermöglicht es dem Fahrzeugführer, die Positionierung des Fahrzeuges in der Einfahrrichtung und quer zu dieser besonders gut zu erkennen.

Zur Auswertung und Veränderung von Bilddaten kann die Recheneinheit die dem Fachmann geläufigen Methoden der Bildverarbeitung einsetzen.

Von der Kameraeinrichtung aufgenommene oder erstellte Bilder sind vorteilhafterweise von der Recheneinheit der Fahrzeugwaschanlage auswertbar. Basierend auf der Auswertung kann beispielswiese von der Hinweiseinheit ein Hinweis an den Fahrzeugführer bereitgestellt werden, eine Ausrichtung des Fahrzeugs relativ zum Einfahrbereich zu verändern. Beispielsweise kann der Fahrzeugführer angeleitet werden, Lenkbewegungen durchzuführen, um die Fahrzeuglängsrichtung in Übereinstimmung mit der Einfahrrichtung zu bringen. Alternativ oder ergänzend kann der Fahrzeugführer darauf hingewiesen werden, dass die Fahrzeuglängsrichtung schräg zur Einfahrrichtung ausgerichtet ist.

An der Hinweiseinheit ist alternativ oder ergänzend ein Hinweis an den Fahrzeugführer bereitstellbar, das Fahrzeug zu stoppen, weiter einzufahren oder zurückzusetzen. Auf diese Weise kann sichergestellt werden, dass das Fahrzeug in Längsrichtung korrekt am Einfahrbereich positioniert ist.

Die vorstehend erläuterten Hinweise können an der Bildanzeige der als Anzeigeeinrichtung ausgestalteten Hinweiseinrichtung optisch darstellbar sein.

Bei einer andersartigen vorteilhaften Umsetzung der Fahrzeugwaschanlage kann vorgesehen sein, dass keine derartigen Hinweise an der Anzeigeeinrichtung dargestellt werden, sondern dass diese lediglich die Wiedergabe von mit der Kameraeinrichtung erstellten Bildern umfasst, gegebenenfalls in geänderter Perspektive.

Ergänzend oder alternativ zur Anzeigeeinrichtung kann die Hinweiseinrichtung insbesondere als akustische Hinweiseinrichtung ausgestaltet sein oder eine solche umfassen.

Günstig ist es, wenn die Kameraeinrichtung an einer dem Fahrzeugführer zugewandten Frontseite der Portalsäule angeordnet ist. Die Verschmutzung der Kameraeinrichtung durch Reinigungsflüssigkeit kann dadurch geringgehalten werden. Zudem kann die Kameraeinrichtung einfacher gereinigt werden, da sie an der dem Fahrzeugführer beim Einfahren zugewandten Frontseite gut zugänglich ist.

Als vorteilhaft erweist es sich, wenn die Hinweiseinrichtung an einer Portalsäule des Portals angeordnet ist. Die Verkabelung der Hinweiseinrichtung, insbesondere ausgestaltet als Anzeigeeinrichtung, lässt sich auf diese Weise einfach bewerkstelligen. Dabei ist es beispielsweise von Vorteil, wenn die Kameraeinrichtung und die Hinweiseinrichtung an derselben Portalsäule angeordnet sind. Die Montage der Kameraeinrichtung und der Hinweiseinrichtung an der Portalsäule kann während eines gemeinsamen Arbeitsschrittes erfolgen und wird dadurch erleichtert. An der Portalsäule kann die Hinweiseinrichtung vom Fahrzeugführer besonders gut wahrgenommen werden.

Um die Verschmutzung der Hinweiseinrichtung zu verringern und diese zugleich besser reinigen zu können, ist es günstig, wenn die Hinweiseinrichtung an einer dem Fahrzeugführer zugewandten Frontseite der Portalsäule angeordnet ist.

Bei einer vorteilhaften Ausführungsform der Fahrzeugwaschanlage ist es günstig, wenn die Kameraeinrichtung unterhalb der Hinweiseinrichtung am Portal angeordnet ist. Unten am Fahrzeug angeordnete Bereiche und eine Radleitschiene lassen sich vom Sichtfeld der Kameraeinrichtung dadurch besser erfassen.

Bei einer andersartigen vorteilhaften Ausführungsform der Fahrzeugwaschanlage ist es günstig, wenn die Kameraeinrichtung oberhalb der Hinweiseinrichtung am Portal angeordnet ist.

Die Kameraeinrichtung und/oder die Hinweiseinrichtung sind bei einer bevorzugten Ausführungsform bevorzugt in einer Höhe von ungefähr 0,5 m bis 3 m oberhalb des Einfahrbereiches angeordnet, vorzugsweise in einer Höhe von ungefähr 1 m bis 2 m.

Es kann vorgesehen sein, dass die Portalsäule eine gehäuseartige oder ein Gehäuse bildende Verkleidung aufweist und dass an der Portalsäule mindestens eine Aufnahme für die Kameraeinrichtung und/oder für die Hinweiseinrichtung gebildet ist. Die Kameraeinrichtung und die Hinweiseinrichtung können in getrennten Aufnahmen an der Portalsäule aufgenommen sein. Alternativ kann eine gemeinsame Aufnahme für die Kameraeinrichtung und die Hinweiseinrichtung vorgesehen sein.

Günstig ist es, wenn mindestens eine transparente Abdeckung der Aufnahme mit der Verkleidung fluchtet oder im Wesentlichen fluchtet. Beispielsweise weist die Portalsäule im Bereich der Verkleidung und der mindestens einen Abdeckung eine planare oder im Wesentlichen planare Ausgestaltung auf. Die Reinigung der Portalsäule und der mit der Verkleidung fluchtenden Abdeckung wird erleichtert. Stufen, Absätze oder Vorsprünge, an denen sich Schmutz sammeln kann, können vermieden werden. Die optische Erscheinung der Portalsäule wird verbessert.

Die mindestens eine transparente Abdeckung kann insbesondere einen Teil der Verkleidung ausbilden. Die Abdeckung ist beispielsweise aus einem Kunststoffmaterial oder einem Glasmaterial gefertigt.

Von Vorteil ist es, wenn die Fahrzeugwaschanlage eine der Kameraeinrichtung zugeordnete Reinigungseinrichtung umfasst. Mittels der Reinigungseinrichtung, die vorteilhafterweise ansteuerbar ist, kann die Kameraeinrichtung oder eine Abdeckung für diese gereinigt und die zuverlässige Funktion der Kameraeinrichtung sichergestellt werden.

Beispielsweise umfasst oder bildet die Reinigungseinrichtung eine Düseneinrichtung, mit der die Kameraeinrichtung oder eine Abdeckung der Kameraeinrichtung mittels Druckgas abreinigbar ist. Dies gibt zum Beispiel die Möglichkeit, Tropfen von Reinigungsflüssigkeit mittels Druckgas, beispielsweise Druckluft, von der Kameraeinrichtung oder deren Abdeckung abzublasen.

Alternativ oder ergänzend kann die Düseneinrichtung eine Wischeinrichtung umfassen oder bilden, mit der die Kameraeinrichtung oder eine Abdeckung der Kameraeinrichtung mittels eines Wischelementes abreinigbar ist. Beispielsweise ist eine bewegbare Wischlippe vorgesehen, die Flüssigkeitstropfen von der Kameraeinrichtung oder deren Abdeckung entfernt.

Alternativ oder ergänzend kann die Reinigungseinrichtung eine Heizeinrichtung umfassen oder ausbilden zum Heizen der Kameraeinrichtung oder einer Abdeckung der Kameraeinrichtung. Mittels der Heizeinrichtung kann an der Abdeckung haftende Reinigungsflüssigkeit verdampft und dadurch entfernt werden.

Die Reinigungseinrichtung kann automatisch betätigbar sein. Beispielsweise wird mittels einer Sensoreinrichtung eine Verschmutzung der Kameraeinrichtung oder deren Abdeckung erfasst und die Reinigungseinrichtung aktiviert. Alternativ oder ergänzend kann eine periodische Aktivierung der Reinigungseinrichtung vorgesehen sein. Alternativ oder ergänzend kann eine manuelle Aktivierung der Reinigungseinrichtung vorgesehen sein.

Auch der Hinweiseinrichtung, insbesondere ausgestaltet als Anzeigeeinrichtung, kann eine Reinigungseinrichtung zugeordnet sein.

Günstig ist es, wenn eine Abdeckeinrichtung mit einer Abdeckung für die Kameraeinrichtung vorgesehen ist, welche Abdeckung von einer diese überdeckenden Schließstellung in eine Freigabestellung und umgekehrt überführbar ist, wobei in der Freigabestellung die Sicht der Kameraeinrichtung auf den Einfahrbereich freigegeben ist. Die Abdeckung kann zum Schutz der Kameraeinrichtung dienen, wenn diese nicht eingesetzt wird. Beispielsweise nimmt die Abdeckung während des Waschbetriebes die Schließstellung ein, um eine Verschmutzung der Kameraeinrichtung mit Reinigungsflüssigkeit zu vermeiden. Auch außerhalb des Betriebs der Fahrzeugwaschanlage kann die Abdeckung die Schließstellung einnehmen. Die Freigabestellung kann beispielsweise lediglich beim Einfahren und Positionieren des Fahrzeugs vor dem Waschbetrieb eingenommen werden.

Die Abdeckung kann an der Portalsäule beispielsweise verschiebbar, schwenkbar oder aufrollbar gehalten sein. Der Abdeckung kann ein Antriebselement zugeordnet sein, um sie motorisch von der Schließstellung in die Freigabestellung und/oder umgekehrt zu überführen. Alternativ ist eine manuelle Überführung der Abdeckung denkbar.

Bei einer vorteilhaften Ausführungsform der Fahrzeugwaschanlage ist es günstig, wenn abhängig von unterschiedlichen Betriebsmodi der Fahrzeugwaschanlage unterschiedliche Informationen an der Anzeigeeinrichtung darstellbar sind, wobei die Betriebsmodi einen Einfahrmodus umfassen, in dem, zumindest teilweise, Bilder basierend auf Bilder an der Kameraeinrichtung darstellbar sind. Die Fahrzeugwaschanlage kann zum Beispiel einen Bereitschaftsmodus einnehmen und den Einfahrmodus. Der Einfahrmodus wird zum Beispiel ausgeführt, wenn der Einfahrbereich mit dem Fahrzeug befahren wird. Bilder des Fahrzeugs können an der Anzeigeeinrichtung dargestellt werden. Im Anschluss daran wird, zum Beispiel in einem Reinigungsmodus, die Reinigung des Fahrzeugs durchgeführt. Der Einfahrmodus kann beispielsweise auch beim Ausfahren des Fahrzeugs aus dem Einfahrbereich nach der Reinigung eingenommen werden.

Die an der Anzeigeeinrichtung darstellbaren Informationen, beispielsweise im Bereitschaftsmodus, im Einfahrmodus und/oder im Reinigungsmodus können unterschiedlich sein. Die Informationen können vorgegeben oder vorgebbar sein. Beispielsweise umfassen die Informationen Statusinformationen der Fahrzeugwaschanlage über den jeweiligen Betriebsmodus. Im Bereitschaftsmodus und/oder im Reinigungsmodus kann beispielsweise Werbeinformation an der Anzeigeeinrichtung dargestellt werden. Alternativ kann vorgesehen sein, dass im Reinigungsmodus eine Statusinformation angezeigt wird, zum Beispiel betreffend das Waschprogramm. Es kann vorgesehen sein, dass ein Betreiber der Fahrzeugwaschanlage oder Servicepersonal über eine Kommunikationsschnittstelle die anzuzeigenden Informationen an die Fahrzeugwaschanlage übermitteln und/oder verwalten kann.

Vorteilhafterweise umfasst die Fahrzeugwaschanlage eine Sensoreinrichtung zum Erkennen, wenn ein Fahrzeug den Einfahrbereich befährt, wobei die Fahrzeugwaschanlage günstigerweise abhängig von einem Signal der Sensoreinrichtung von einem Bereitschaftsmodus in den Einfahrmodus überführbar ist. Beim Befahren der Fahrzeugwaschanlage kann beispielsweise abhängig vom Signal der Sensoreinrichtung der Bildinhalt der Anzeigeeinrichtung verändert werden. Während beispielsweise im Bereitschaftsmodus und/oder im Reinigungsmodus eine Werbeinformation oder andersartige Information an der Anzeigeeinrichtung dargestellt werden kann, stellt die Anzeigeeinrichtung mit dem Befahren des Einfahrbereiches und/oder beim Ausfahren des Fahrzeuges von der Kameraeinrichtung aufgenommene Bilder dar, die dem Fahrzeugführer die Ausrichtung des Fahrzeuges relativ zum Einfahrbereich erleichtern.

Es kann vorzugsweise vorgesehen sein, dass die Kameraeinrichtung die Sensoreinrichtung umfasst oder ausbildet. Eine gesonderte Sensoreinrichtung kann auf diese Weise eingespart werden.

Als vorteilhaft erweist es sich, wenn eine Kommunikationsschnittstelle vorgesehen ist zum Aufbau einer Datenverbindung zwischen der Kameraeinrichtung und einem externen Zusatzgerät. Die Kommunikationsschnittstelle erlaubt zum Beispiel den Aufbau einer kabellosen und/oder kabelgebundenen Verbindung. Beispielsweise wird am externen Zusatzgerät eine Serviceschnittstelle für die Kameraeinrichtung angeboten. Diese Schnittstelle kann ein Internetportal oder dergleichen umfassen. Mittels des externen Zusatzgerätes kann der Betreiber oder Servicepersonal beispielsweise eine Kalibrierung der Kameraeinrichtung durchführen. Alternativ oder ergänzend können Bilder von der Kameraeinrichtung an das Zusatzgerät übertragen werden.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische Darstellung einer erfindungsgemäßen Fahrzeugwaschanlage und ein zu waschendes Fahrzeug in einer Frontansicht;
- Figur 2:: eine Darstellung der Fahrzeugwaschanlage und des Fahrzeuges aus Figur 1 in Draufsicht;
- Figur 3:: eine Darstellung eines Ausschnitts einer Portalsäule der Fahrzeugwaschanlage aus Figur 1, wobei eine Anzeigeeinrichtung, eine Kameraeinrichtung und eine Reinigungseinrichtung dargestellt sind;
- Figur 4:: eine Darstellung entsprechend Figur 3, wobei die Anzeigeeinrichtung einen andersartigen Bildinhalt aufweist;

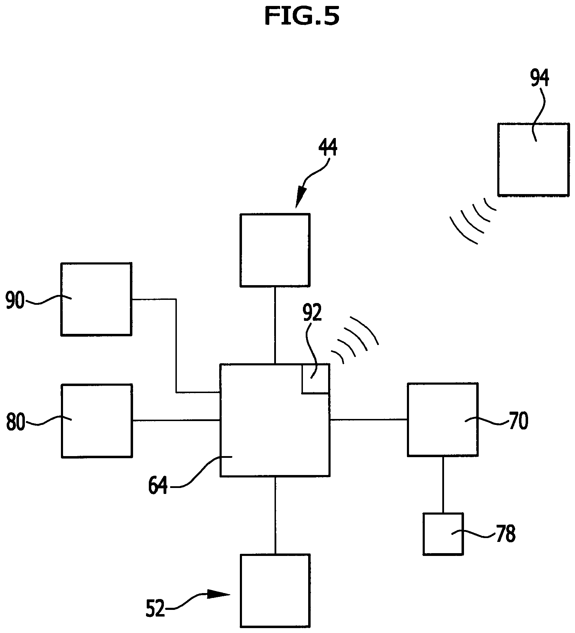

- Figur 5:: eine schematische Darstellung eines Steuersystems der Fahrzeugwaschanlage aus Figur 1; und
- Figuren 6 bis 8:: schematisch unterschiedliche Abdeckeinrichtungen für die Kameraeinrichtung der Fahrzeugwaschanlage.

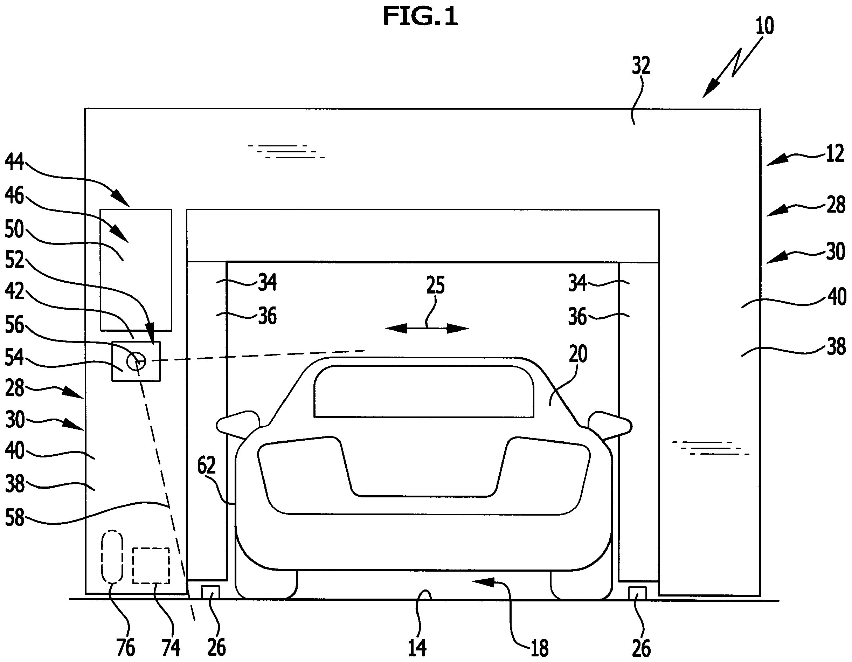

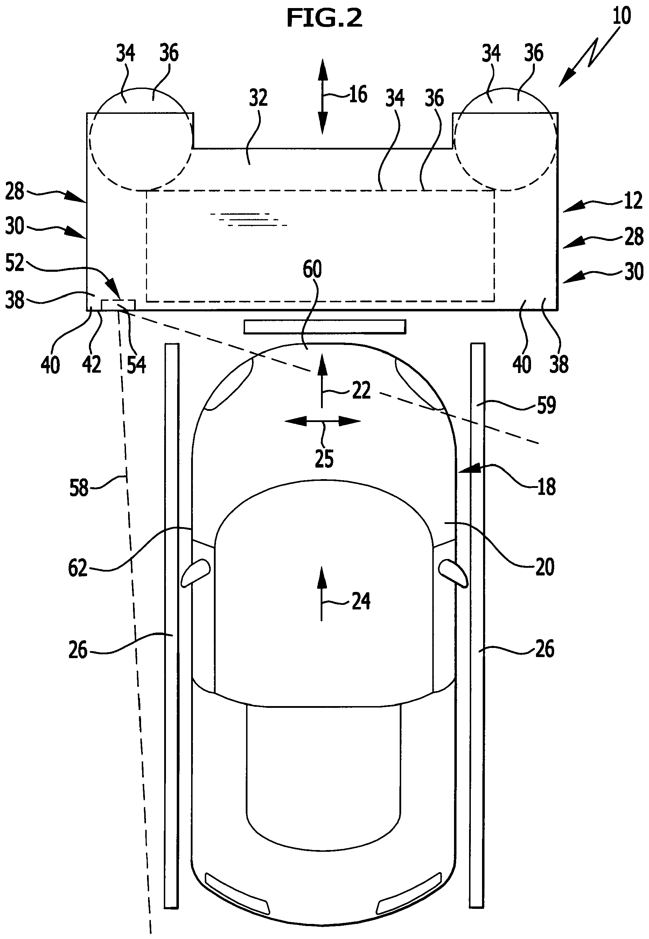

Die Figuren 1 und 2 zeigen schematisch eine insgesamt mit dem Bezugszeichen 10 belegte vorteilhafte Ausführungsform einer erfindungsgemäßen Fahrzeugwaschanlage. Die Fahrzeugwaschanlage 10 ist vorliegend als Portalwaschanlage ausgestaltet und umfasst ein Portal 12. Das Portal 12 ist in an sich bekannter Weise auf einer Aufstellfläche 14 positioniert und an dieser mittels einer in der Zeichnung nicht dargestellten Antriebseinrichtung längs einer Verfahrrichtung 16 beweglich angeordnet.

Die Fahrzeugwaschanlage 10 umfasst einen Einfahrbereich 18 für ein zu waschendes Fahrzeug 20. Das Fahrzeug 20 kann längs einer Einfahrrichtung 22, die entlang der Verfahrrichtung 16 ausgerichtet ist, in den Einfahrbereich 18 einfahren. Vorteilhaft ist es dabei, wenn eine Längsrichtung 24 des Fahrzeugs 20 mit der Einfahrrichtung 22 fluchtet.

Der Einfahrbereich 18 ist quer zur Einfahrrichtung 22 (in einer Querrichtung 25) durch Begrenzungen seitlich begrenzt, bei denen es sich vorliegend um Radleitschienen 26 handelt. Das Fahrzeug 20 ist korrekt am Einfahrbereich 18 positioniert, wenn es zwischen den Radleitschienen 26 angeordnet ist, vorzugsweise mittig zwischen den Radleitschienen 26. Zusätzlich ist möglichst sicherzustellen, dass das Fahrzeug 20 in der Einfahrrichtung 22 soweit wie nötig, jedoch nicht zu weit, in den Einfahrbereich 18 eingefahren ist.

Das Portal 12 umfasst zwei als Portalsäulen 28 ausgestaltete vertikale Träger 30, die in Querrichtung 25 voneinander beabstandet sind und obenseitig mittels eines Querträgers 32 verbunden sind. Am Portal 12 sind Waschwerkzeuge 34 der Fahrzeugwaschanlage 10 aufgenommen. Die Waschwerkzeuge 34 umfassen beispielsweise in an sich bekannter Weise Karosseriebürsten 36 für Seitenflächen, Front- und Heckflächen sowie obenliegende Fahrzeugbereiche. Waschwerkzeuge 34 können ferner in Form von nicht dargestellten Düseneinrichtungen vorhanden sein, um das Fahrzeug 20 mit einer Reinigungsflüssigkeit zu beaufschlagen.

Die Portalsäulen 28 umfassen vorliegend eine ein Gehäuse 38 bildende Verkleidung 40. An einer Frontseite 42 der Portalsäulen 28, die dem Fahrzeugführer beim Einfahren des Fahrzeugs 20 in den Einfahrbereich 18 zugewandt ist, ist die Verkleidung 40 vorzugsweise planar oder im Wesentlichen planar ausgestaltet.

An einer der Portalsäulen 28, im vorliegenden Fall an der in Einfahrrichtung 22 linken Portalsäule 28, umfasst die Fahrzeugwaschanlage 10 eine Hinweiseinrichtung 44. Die Hinweiseinrichtung 44 ist als Anzeigeeinrichtung 46 ausgestaltet und umfasst eine Bildanzeige 48 zum Darstellen von Bildern. Die Bildanzeige 48 kann von dem das Fahrzeug 20 einfahrenden Fahrzeugführer gut erkannt und beobachtet werden.

Der Anzeigeeinrichtung 46 ist eine Abdeckung 50 zugeordnet. Die Abdeckung 50 bildet einen Teil der Verkleidung 40 und fluchtet mit dem Gehäuse 38. Gegenüber der Frontseite 42 zurückgesetzt ist an der Portalsäule 28 eine Aufnahme für die Anzeigeeinrichtung 46 gebildet, die von der Abdeckung 50 überdeckt ist.

Ebenfalls an einer Portalsäule 28, vorliegend dieselbe Portalsäule 28 wie diejenige der Anzeigeeinrichtung 46, ist eine Kameraeinrichtung 52 der Fahrzeugwaschanlage 10 angeordnet. Zur Aufnahme der Kameraeinrichtung 52 ist eine bezüglich der Frontseite 42 zurückgesetzte Aufnahme an der Portalsäule 28 gebildet. Der Kameraeinrichtung 52 ist eine die Aufnahme überdeckende Abdeckung 54 zugeordnet. Die Abdeckung 54 bildet wie die Abdeckung 50 einen Teil der Verkleidung 40 und fluchtet an der Frontseite 42 mit dem Gehäuse 38.

Die Kameraeinrichtung 52 und die Anzeigeeinrichtung 46 sind vorliegend beispielsweise in einer Höhe von ungefähr 1 m bis 2 m oberhalb des Einfahrbereiches 18 angeordnet.

Die Kameraeinrichtung 52 umfasst vorliegend eine Monokamera 56. Eine weitere Kamera ist nicht vorgesehen, so dass die Kameraeinrichtung 52 keine Stereokamera ist.

Die Kameraeinrichtung 52 ist aufgrund der Positionierung an der Portalsäule 28, bezogen auf die Querrichtung 25, seitlich bezüglich dem Einfahrbereich 18 angeordnet. Insbesondere weist die Kameraeinrichtung 52 bezüglich einer Mitte des Einfahrbereiches 18 einen seitlichen Versatz auf.

Ein Sichtfeld 58 der Kameraeinrichtung 52 ist zur Erfassung des Einfahrbereiches 18, von der Seite, bezogen auf die Querrichtung 25, auf den Einfahrbereich 18 gerichtet. Die Kameraeinrichtung 52 schaut dadurch mit dem Sichtfeld 58 schräg von vorne auf den Einfahrbereich 18.

Die Kameraeinrichtung 52 ist so beschaffen und ausgerichtet, dass mit dem Sichtfeld 58 die der Kameraeinrichtung 52 zugewandte Radleitschiene 26 im Wesentlichen vollständig erfassbar ist. Die der Kameraeinrichtung 52 abgewandte Radleitschiene 26 kann weitgehend erfasst werden, abgesehen von einem dem Portal 12 zugewandten Endabschnitt 59 außerhalb des Sichtfeldes 58.

Von dem einfahrenden Fahrzeug 20 kann die Frontseite 60 zumindest teilweise und die der Kameraeinrichtung 52 zugewandte Seitenfläche 62 ebenfalls zumindest teilweise erfasst werden. Je nach Höhe des Fahrzeugs 20 können auch obenliegende Fahrzeugbereiche wie eine Motorhaube, eine Frontscheibe oder ein Dach des Fahrzeugs 20 vom Sichtfeld 58 erfasst werden.

Vorliegend ist die Kameraeinrichtung 52 unterhalb der Anzeigeeinrichtung 46 positioniert. Dies dient dazu, untenliegende Bereiche der Seitenfläche 62 und die Radleitschiene 26 möglichst gut erfassen zu können, um insbesondere die Positionierung des Fahrzeugs 20 in Querrichtung ermitteln zu können.

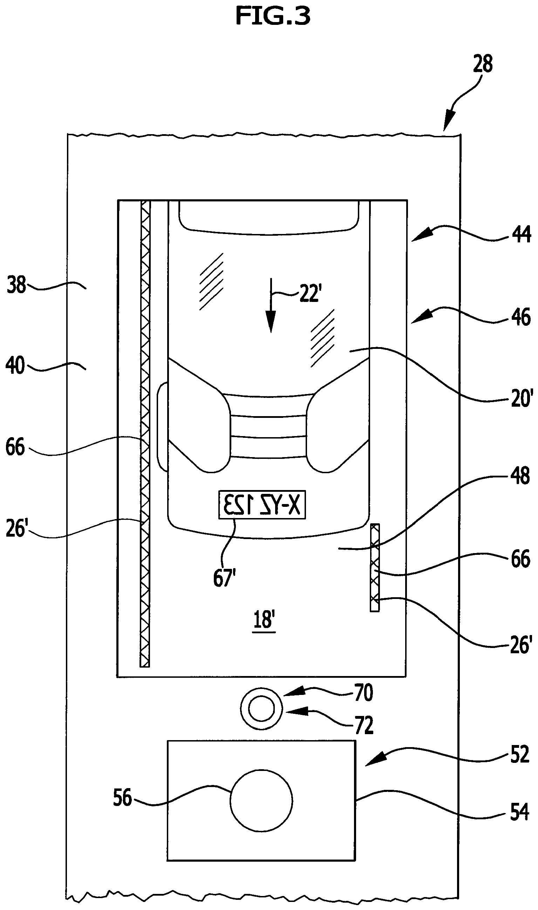

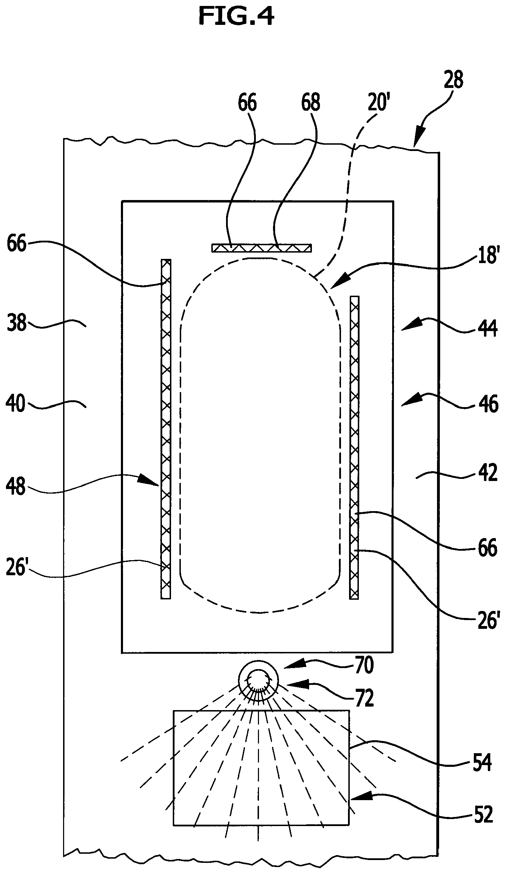

Bilddaten der Kameraeinrichtung 52 werden an eine Recheneinheit 64 der Fahrzeugwaschanlage 10 übermittelt. Die Recheneinheit 64 kann Bilddaten zur Anzeige von Bildern an die Bildanzeige 48 übermitteln (Figuren 3 und 4, in denen Bilder von Merkmalen mit demselben Bezugszeichen einschließlich Hochkomma (') gekennzeichnet sind).

Vorteilhaft ist es, wenn Bilddaten der Kameraeinrichtung 52 mit Methoden der Bildverarbeitung von der Recheneinheit 64 ausgewertet und/oder verändert werden können. Dies wird nachfolgend erläutert.

Beispielsweise können die Bilddaten der Kameraeinrichtung 52 von der Recheneinheit 64 so verändert werden, dass das an der Bildanzeige 48 dargestellte Bild der Kameraeinrichtung 52 hinsichtlich der Perspektive verändert ist. Durch die Positionierung der Kameraeinrichtung 52 mit seitlichem Versatz relativ zum Einfahrbereich 18 ist das unveränderte Bild für den Fahrzeugführer möglicherweise nicht so gut zu erkennen. Um dem Fahrzeugführer die in den Bilddaten enthaltene Bildinformation intuitiver erfassbar zu machen, kann die Recheneinheit 64 das Bild an der Bildanzeige 48 beispielsweise in einer Weise darstellen, als wäre die Kameraeinrichtung 52 längs oder parallel der Einfahrrichtung 22 ausgerichtet. Das Bild wird gewissermaßen gezielt verzerrt und erweckt beim Fahrzeugführer den Eindruck, als sei die optische Achse der Kameraeinrichtung 52 nicht schräg zur Einfahrrichtung 22 ausgerichtet, sondern parallel zur oder längs der Einfahrrichtung 22.

Die schematische Darstellung von Figur 3 zeigt ein entsprechendes, von der Recheneinheit 64 verändertes Bild an der Bildanzeige 48. Mindestens eine für den Fahrzeugführer wahrnehmbare Markierung im Bild kann vorgesehen sein, um diesen zu unterstützen. Der Fahrzeugführer sieht das in der Einfahrrichtung 22 bewegte Fahrzeug 20 sowie die Radleitschiene 26, die der Kameraeinrichtung 52 zugewandt ist. Um diese noch besser erkennen zu können, blendet die Recheneinheit 64 vorliegend an der Radleitschiene 26 eine Markierung 66 ein. Die Markierung 66 besteht zum Beispiel in einer farbigen Hervorhebung der Radleitschiene 26.

Ein Bild des Endabschnittes 59 wird aufgrund der Lage des Sichtfeldes 58 nicht angezeigt.

Beim Einfahren kann der Fahrzeugführer feststellen, ob das Fahrzeug 20 zu nah an der Radleitschiene 26 positioniert ist oder einen zu großen Abstand von dieser aufweist. Darüber hinaus kann der Fahrzeugführer erkennen, ob das Fahrzeug 20 im Wesentlichen parallel zur Radleitschiene 26 ausgerichtet und dementsprechend die Längsrichtung 24 ungefähr mit der Einfahrrichtung 22 fluchtet.

Die Recheneinheit 64 verändert die Bilddaten außerdem derart, dass der Bildinhalt in Querrichtung 25 gespiegelt an der Bildanzeige 28 dargestellt ist, insbesondere gespiegelt an einer in Längsrichtung 24 mittig verlaufenden vertikalen Spiegelebene. Dies ist beispielsweise am Bild eines Kennzeichens 67' in Figur 3 zu erkennen. Die Spiegelung bietet den Vorteil, dass Lenkbewegungen, die der Fahrzeugführer ausführt, seitenrichtig an der Bildanzeige 48 dargestellt werden. Lenkt der Fahrzeugführer nach links, bewegt sich das Fahrzeug 20' an der Bildanzeige 48 nach links. Lenkt der Fahrzeugführer nach rechts, bewegt sich das Fahrzeug 20' nach rechts. Der Inhalt der Bildanzeige 48 ist für den Fahrzeugführer dadurch einfacher zu erfassen.

Die Recheneinheit 64 kann die Bilddaten auswerten um festzustellen, ob Korrekturen der Ausrichtung des Fahrzeugs 20 vorgenommen werden sollten. Ein entsprechender, den Fahrzeugführer unterstützender Hinweis kann an der Bildanzeige 48 dargestellt werden. Der Fahrzeugführer kann darauf basierend beispielsweise Lenkbewegungen ausführen oder erneut in den Einfahrbereich 18 einfahren. Alternativ oder ergänzend kann die Recheneinheit 64 einen Hinweis für den Fahrzeugführer an der Bildanzeige 48 einblenden, das Fahrzeug 20 zu stoppen, weiter einzufahren oder zurückzusetzen.

Eine weitere Möglichkeit der Darstellung ist in Figur 4 schematisch gezeigt. Dabei umfasst die Bildanzeige 48 eine Draufsicht auf die Kontur des Fahrzeugs 20 und den Einfahrbereich 18 sowie die Radleitschienen 26 von oben. Ein diesbezügliches Bild wird auf Basis der Bilddaten der Kameraeinrichtung 52 von der Recheneinheit 64 bereitgestellt.

Trotz dessen, dass mit dem Sichtfeld 58 der Kameraeinrichtung 52 möglicherweise nur ein Teil des Einfahrbereiches 18 und ein Teil des Fahrzeugs 20 erkennbar ist, kann die in den Bilddaten enthaltene Information von der Recheneinheit 64 ergänzt werden. Dabei kann insbesondere berücksichtigt werden, dass die geometrische Beziehung der Kameraeinrichtung 52 zum Einfahrbereich 18 bekannt ist und von einer symmetrischen Ausgestaltung des Fahrzeugs 20 ausgegangen wird.

Ergänzend zur Änderung der Perspektive kann die Recheneinheit 64 Markierungen 66 einblenden. Figur 4 zeigt dies beispielhaft anhand von Markierungen 66 der Radleitschienen 26 und einer Einfahrbegrenzung 68.

Die Integration der Kameraeinrichtung 52 in die Portalsäule 28 erleichtert die Konstruktion der Fahrzeugwaschanlage 10 dadurch, dass die Verkabelung der Kameraeinrichtung 52 vereinfacht wird. Vorteilhaft hierfür ist ferner, dass die Anzeigeeinrichtung 46 und die Kameraeinrichtung 52 an derselben Portalsäule 28 angeordnet sind. Gesonderte Halterungen für die Kameraeinrichtung 52, wie im Stand der Technik, können eingespart werden. Der Einsatz einer Monokamera 56 dient zur weiteren Verringerung des Herstellungsaufwandes. Außerdem wird der Auswertungsaufwand auf Seiten der Recheneinheit 64 begrenzt.

Die Positionierung der Anzeigeeinrichtung 46 und der Kameraeinrichtung 52 an der Frontseite mit korrespondierenden Abdeckungen 50 bzw. 54 verringert den Schmutzeintrag. Die Reinigung wird durch die mit der Verkleidung 40 fluchtenden Abdeckungen 50 und 54 erleichtert.

Die Fahrzeugwaschanlage 10 kann eine Reinigungseinrichtung 70 insbesondere zur Reinigung der Abdeckung 54 aufweisen. Die Reinigungseinrichtung 70 umfasst beispielsweise eine Düseneinrichtung 72, die an oder nahe der Abdeckung 54 angeordnet ist. Die Düseneinrichtung 72 kann mittels Druckgas und insbesondere Druckluft beaufschlagt werden, um Reinigungsflüssigkeit von der Abdeckung 54 abzublasen (in Figur 4 schematisch dargestellt). Die Fahrzeugwaschanlage 10 kann zur Beaufschlagung der Düseneinrichtung 72 mit Druckgas eine Fördereinrichtung 74 und/oder einen Druckgasspeicher 76 umfassen.

Denkbar ist, dass die Reinigungseinrichtung 70 eine Heizeinrichtung für die Abdeckung 54 aufweist, um durch deren Beheizen Reinigungsflüssigkeit zu verdampfen.

Alternativ oder ergänzend ist denkbar, dass die Reinigungseinrichtung 70 eine Wischeinrichtung umfasst mit einem Wischelement, mit dem Reinigungsflüssigkeit von der Abdeckung 54 abgewischt werden kann.

Die Reinigungseinrichtung 70 kann eine Sensoreinrichtung 78 zugeordnet sein, um etwaigen Reinigungsbedarf zu erkennen und eine bedarfsabhängige Reinigung auszulösen. Alternativ oder ergänzend kann eine vom Bedienpersonal ausgelöste oder periodische Reinigung vorgesehen sein.

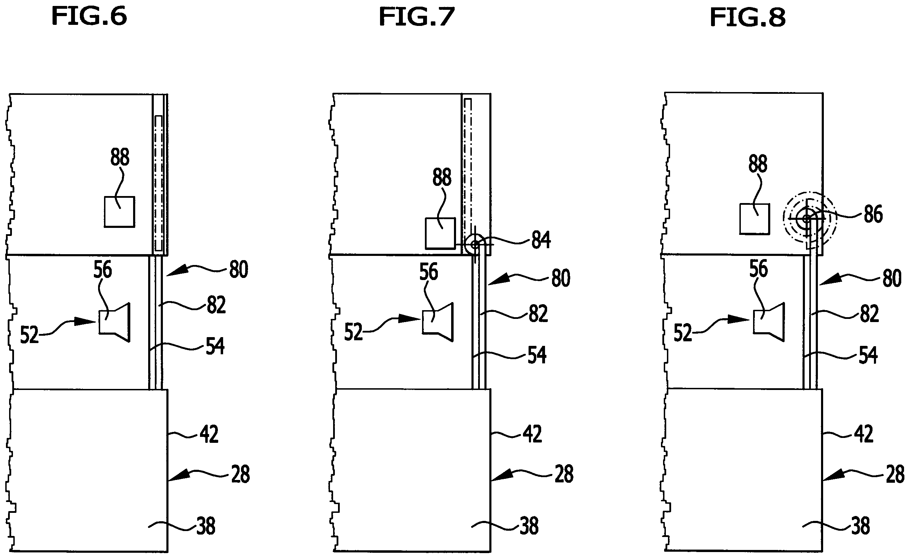

Die Figur 6 bis 8 zeigen unterschiedliche Varianten einer Abdeckeinrichtung 80, mit einer jeweiligen Abdeckung 82, mit der die Kameraeinrichtung 52 und deren Abdeckung 54 wahlweise abgedeckt oder freigegeben werden kann. Die Abdeckeinrichtung 80 kann zum Bewegen der Abdeckung 82 ein Antriebselement 88 aufweisen.

Beispielsweise ist vorgesehen, dass die Abdeckung 54 bezüglich der Frontseite 52 etwas nach hinten versetzt ist, wie in den Figuren 6 bis 8 dargestellt. Alternativ kann die Abdeckung 82 bezüglich der Frontseite 42 vorgelagert sein.

Die Abdeckung 82 gemäß der Variante von Figur 6 ist an der Portalsäule 28 verschieblich gelagert, beispielsweise in der oder parallel zur Frontseite 42.

Bei der Variante gemäß Figur 7 ist die Abdeckung 82 schwenkbar an der Portalsäule 28 gelagert, zum Beispiel um eine in Querrichtung verlaufende horizontale Schwenkachse 84.

Bei der Variante gemäß Figur 8 umfasst die Abdeckung 82 zum Beispiel mehrere aufwickelbare und abwickelbare Segmente, die auf eine um eine Drehachse 86 drehbare Welle gewickelt werden können. Die Drehachse 86 ist beispielsweise in Querrichtung und horizontal ausgerichtet.

Die Abdeckung 82 kann von einer Schließstellung, in der die Kameraeinrichtung 52 abgedeckt ist und geschützt ist, in eine Freigabestellung überführt werden. In der Freigabestellung ist die Kameraeinrichtung 52 so freigegeben, dass mit dem Sichtfeld 58 der Einfahrbereich 18 und/oder das Fahrzeug 20 wie vorstehend erläutert erfasst werden können. Die Freigabe der Kameraeinrichtung 52 erfolgt vorzugsweise nur zum Einfahren und Positionieren des Fahrzeugs 20. Während des Reinigungsbetriebes nimmt die Abdeckung 82 vorteilhafterweise die Schließstellung ein.

Die Fahrzeugwaschanlage 10 kann unterschiedliche Betriebsmodi einnehmen. Beispielsweise ist ein Bereitschaftsmodus vorgesehen, der eingenommen wird, wenn kein Reinigungsbetrieb an Fahrzeugen 20 ausgeführt wird und kein Fahrzeug 20 in den Einfahrbereich 18 einfährt oder aus diesem ausfährt. Während des Ein- oder Ausfahrens kann die Fahrzeugwaschanlage 10 beispielsweise einen Einfahrmodus einnehmen, während der Reinigung einen Reinigungsmodus.

An der Anzeigeeinrichtung 46 können vorzugsweise unterschiedliche Informationen abhängig davon angezeigt werden, welchen Betriebsmodus die Fahrzeugwaschanlage 10 einnimmt. Beispielsweise werden im Bereitschaftsmodus Werbeinformationen oder andere Informationen angezeigt. Im Einfahrmodus können, zum Beispiel beim Einfahren und/oder beim Ausfahren des Fahrzeugs 20, von der Kameraeinrichtung 52 erstellte Bilder wie vorstehend erläutert angezeigt werden. Im Reinigungsmodus kann beispielsweise eine Werbeinformation angezeigt werden, alternativ oder ergänzend eine Statusinformation, zum Beispiel betreffend das Waschprogramm.

Die Fahrzeugwaschanlage 10 kann eine Sensoreinrichtung 90 umfassen, die beispielsweise mit der eine Steuereinheit bildenden Recheneinheit 64 gekoppelt ist. Die Sensoreinrichtung 90 umfasst zum Beispiel eine Lichtschranke oder einen Lichtvorhang. Es kann vorgesehen sein, dass die Sensoreinrichtung 90 durch die Kameraeinrichtung 52 ausgebildet wird und das Einfahren des Fahrzeugs 20 mit der Monokamera 56 festgestellt wird.

Beim Befahren des Einfahrbereiches 18 wird das Fahrzeug 20 mittels der Sensoreinrichtung 90 erfasst. Abhängig von dem Signal der Sensoreinrichtung 90 kann die Fahrzeugwaschanlage 10 vom Bereitschaftsmodus in den Einfahrmodus überführt werden. Dementsprechend kann sich der Inhalt der Bildanzeige 48 ändern. Die Fahrzeugreinigung kann anschließend im Reinigungsmodus erfolgen.

Die Fahrzeugwaschanlage 10 kann eine Kommunikationsschnittstelle 92 zum Aufbauen einer Datenverbindung mit einem externen Zusatzgerät 94 umfassen oder ausbilden. Vorliegend wird die Kommunikationsschnittstelle 92 beispielsweise von der Recheneinheit 64 bereitgestellt. Die Datenverbindung kann kabellos und/oder kabelgebunden sein.

Mittels des Zusatzgerätes kann ein Betreiber oder Servicepersonal oder Wartungspersonal beispielsweise eine Kalibrierung der Kameraeinrichtung 52 durchführen. Zu diesem Zweck kann am Zusatzgerät 94 beispielsweise Zugriff auf ein Datenverarbeitungsprogramm ermöglicht werden, etwa mittels eines Internetportals. Einstellungen der Abbildungseigenschaften der Kamera 52 lassen sich vorzugsweise ebenso mittels des Zusatzgerätes 94 verändern.

Die Datenverbindung kann bidirektional ausgestaltet sein. Beispielsweise können Bilder der Kameraeinrichtung 52 von der Fahrzeugwaschanlage 10 an das Zusatzgerät 94 übertragen werden.

### Bezugszeichenliste:

- 10: Fahrzeugwaschanlage
- 12: Portal
- 14: Aufstellfläche
- 16: Verfahrrichtung
- 18: Einfahrbereich
- 20: Fahrzeug
- 22: Einfahrrichtung
- 24: Längsrichtung
- 25: Querrichtung
- 26: Radleitschiene
- 28: Portalsäule
- 30: vertikaler Träger
- 32: Querträger
- 34: Waschwerkzeug
- 36: Karosseriebürste
- 38: Gehäuse
- 40: Verkleidung
- 42: Frontseite
- 44: Hinweiseinrichtung
- 46: Anzeigeeinrichtung
- 48: Bildanzeige
- 50: Abdeckung
- 52: Kameraeinrichtung
- 54: Abdeckung
- 56: Monokamera
- 58: Sichtfeld
- 59: Endabschnitt
- 60: Frontseite
- 62: Seitenfläche
- 64: Recheneinheit
- 66: Markierung
- 67': Kennzeichen
- 68: Einfahrbegrenzung
- 70: Reinigungseinrichtung
- 72: Düseneinrichtung
- 74: Fördereinrichtung
- 76: Druckgasspeicher
- 78: Sensoreinrichtung
- 80: Abdeckeinrichtung
- 82: Abdeckung
- 84: Schwenkachse
- 86: Drehachse
- 88: Antriebselement
- 90: Sensoreinrichtung
- 92: Kommunikationsschnittstelle
- 94: Zusatzgerät

## Patentansprüche

1. Fahrzeugwaschanlage, umfassend einen Einfahrbereich (18) für ein zu waschendes Fahrzeug (20), eine Kameraeinrichtung (52) mit einem auf den Einfahrbereich (18) gerichteten Sichtfeld (58), eine Recheneinheit (64) und eine Hinweiseinrichtung (44) zum Bereitstellen eines Hinweises für einen Fahrzeugführer abhängig von mindestens einem mit der Kameraeinrichtung (52) erstellten Bild, wobei die Fahrzeugwaschanlage (10) ein Portal (12) aufweist, an dem vorzugsweise mindestens ein Waschwerkzeug (34) gehalten ist, **dadurch gekennzeichnet, dass** die Kameraeinrichtung (52) an einer Portalsäule (28) des Portals (12) seitlich bezüglich dem Einfahrbereich (18) versetzt positioniert ist, wobei das Sichtfeld (58) von der Seite auf den Einfahrbereich (18) gerichtet ist, und dass die Hinweiseinrichtung (44) eine Anzeigeeinrichtung (46) ist oder umfasst, an der mittels der Kameraeinrichtung (52) erstellte Bilder von der Recheneinheit (64) verändert darstellbar sind, wobei die Veränderung eine Darstellung des Bildinhaltes der Bilder mit veränderter Perspektive und/oder eine in Quer- und/oder in Längsrichtung des Einfahrbereiches (18) gespiegelte Darstellung des Bildinhaltes umfasst.

2. Fahrzeugwaschanlage nach Anspruch 1, **dadurch gekennzeichnet, dass** der Einfahrbereich (18) von seitlichen, quer zu einer Einfahrrichtung (22) voneinander beabstandeten Begrenzungen begrenzt ist und dass mit dem Sichtfeld (58) zumindest die der Kameraeinrichtung (52) näher gelegene Begrenzung des Einfahrbereiches (18) zumindest abschnittsweise erfassbar ist, vorzugsweise dass die Begrenzungen Radleitschienen (26) für das Fahrzeug (20) sind oder umfassen.

3. Fahrzeugwaschanlage nach einem der voranstehenden Ansprüche, **dadurch gekennzeichnet, dass** die Kameraeinrichtung (52) eine Monokamera (58) ist oder umfasst und/oder dass die Kameraeinrichtung (52) zum Erstellen bewegter Bilder ausgestaltet ist.

4. Fahrzeugwaschanlage nach einem der voranstehenden Ansprüche, **dadurch gekennzeichnet, dass** die Veränderung zusätzlich mindestens eines der Folgenden umfasst:
- eine Darstellung einer vom Fahrzeugführer wahrnehmbaren Markierung (66) im Bild, insbesondere zum Markieren einer vorderen Begrenzung oder von seitlichen Begrenzungen des Einfahrbereiches (18); und
- eine Darstellung des Einfahrbereiches (18) und/oder des Fahrzeuges (20) oder dessen Kontur von oben zwischen Begrenzungen des Einfahrbereiches (18).

5. Fahrzeugwaschanlage nach einem der voranstehenden Ansprüche, **dadurch gekennzeichnet, dass** die Perspektive derart gewählt wird, dass seitliche Begrenzungen des Einfahrbereiches (18) im Wesentlichen parallel zu Seitenrändern der Anzeigeeinrichtung (46) und/oder im Wesentlichen symmetrisch zueinander an der Anzeigeeinrichtung (46) dargestellt werden.

6. Fahrzeugwaschanlage nach einem der voranstehenden Ansprüche, **dadurch gekennzeichnet, dass** von der Kameraeinrichtung (52) aufgenommene Bilder von der Recheneinheit (64) auswertbar sind und dass basierend auf der Auswertung zumindest eines der Folgenden von der Hinweiseinheit (44) bereitstellbar ist:
- ein Hinweis an den Fahrzeugführer, eine Ausrichtung des Fahrzeugs (20) relativ zum Einfahrbereich (18) zu verändern; und
- ein Hinweis an den Fahrzeugführer, das Fahrzeug (20) zu stoppen, weiter einzufahren oder zurückzusetzen.

7. Fahrzeugwaschanlage nach einem der voranstehenden Ansprüche, **dadurch gekennzeichnet, dass** zumindest eines der Folgenden gilt:
- die Kameraeinrichtung (52) ist an einer dem Fahrzeugführer zugewandten Frontseite (42) der Portalsäule (28) angeordnet;
- die Kameraeinrichtung (52) ist unterhalb der Hinweiseinrichtung (44) am Portal (12) angeordnet, oder die Kameraeinrichtung (52) ist oberhalb der Hinweiseinrichtung (44) am Portal (12) angeordnet.

8. Fahrzeugwaschanlage nach einem der voranstehenden Ansprüche, **dadurch gekennzeichnet, dass** die Hinweiseinrichtung (44) an einer Portalsäule (28) des Portals (12) angeordnet ist.

9. Fahrzeugwaschanlage nach Anspruch 8, **dadurch gekennzeichnet, dass** zumindest eines der Folgenden gilt:
- die Kameraeinrichtung (52) und die Hinweiseinrichtung (44) sind an derselben Portalsäule (28) angeordnet;
- die Hinweiseinrichtung (44) ist an einer dem Fahrzeugführer zugewandten Frontseite (42) der Portalsäule (28) angeordnet;
- die Kameraeinrichtung (52) und/oder die Hinweiseinrichtung (44) sind in einer Höhe von ungefähr 0,5 m bis 3 m oberhalb des Einfahrbereiches (18) angeordnet, vorzugsweise in einer Höhe von ungefähr 1 m bis 2 m.

10. Fahrzeugwaschanlage nach einem der voranstehenden Ansprüche, **dadurch gekennzeichnet, dass** die Portalsäule (28) eine gehäuseartige oder ein Gehäuse (38) bildende Verkleidung (40) aufweist und dass an der Portalsäule (28) mindestens eine Aufnahme für die Kameraeinrichtung (52) und/oder für die Hinweiseinrichtung (44) gebildet ist, wobei vorzugsweise mindestens eine transparente Abdeckung (50, 54) der mindestens einen Aufnahme mit der Verkleidung (40) fluchtet oder im Wesentlichen fluchtet.

11. Fahrzeugwaschanlage nach einem der voranstehenden Ansprüche, **dadurch gekennzeichnet, dass** die Fahrzeugwaschanlage (10) eine der Kameraeinrichtung (52) zugeordnete Reinigungseinrichtung (70) umfasst, vorzugsweise dass die Reinigungseinrichtung (70) zumindest eines der Folgenden umfasst oder ausbildet:
- eine Düseneinrichtung (72), mit der die Kameraeinrichtung (52) oder eine Abdeckung (54) der Kameraeinrichtung (52) mittels Druckgas abreinigbar ist;
- eine Wischeinrichtung, mit der die Kameraeinrichtung (52) oder eine Abdeckung (54) der Kameraeinrichtung (52) mittels eines Wischelementes abreinigbar ist; und
- eine Heizeinrichtung zum Heizen der Kameraeinrichtung (52) oder einer Abdeckung (54) der Kameraeinrichtung (52), um Flüssigkeit zu entfernen.

12. Fahrzeugwaschanlage nach einem der voranstehenden Ansprüche, **dadurch gekennzeichnet, dass** eine Abdeckeinrichtung (80) mit einer Abdeckung (82) für die Kameraeinrichtung (52) vorgesehen ist, welche Abdeckung (80) von einer diese überdeckenden Schließstellung in eine Freigabestellung und umgekehrt überführbar ist, wobei in der Freigabestellung die Sicht der Kameraeinrichtung (52) auf den Einfahrbereich (18) freigegeben ist, vorzugsweise dass die Abdeckung (80) an der Portalsäule (28) verschiebbar, schwenkbar oder aufrollbar gehalten ist.

13. Fahrzeugwaschanlage nach einem der voranstehenden Ansprüche, **dadurch gekennzeichnet, dass** von unterschiedlichen Betriebsmodi der Fahrzeugwaschanlage (10) unterschiedliche Informationen an der Anzeigeeinrichtung (46) darstellbar sind, wobei die Betriebsmodi einen Einfahrmodus umfassen, in dem, zumindest teilweise, Bilder basierend auf Bildern der Kameraeinrichtung (52) darstellbar sind.

14. Fahrzeugwaschanlage nach Anspruch 13, **dadurch gekennzeichnet, dass** die Fahrzeugwaschanlage (10) eine Sensoreinrichtung (90) umfasst zum Erkennen, dass ein Fahrzeug (20) den Einfahrbereich (18) befährt, und dass die Fahrzeugwaschanlage (10) abhängig von einem Signal der Sensoreinrichtung (90) von einem Bereitschaftsmodus in den Einfahrmodus überführbar ist, vorzugsweise dass die Kameraeinrichtung (52) die Sensoreinrichtung (90) umfasst oder ausbildet.

15. Fahrzeugwaschanlage nach einem der voranstehenden Ansprüche, **dadurch gekennzeichnet, dass** eine Kommunikationsschnittstelle (92) vorgesehen ist zum Aufbau einer Datenverbindung zwischen der Kameraeinrichtung (52) und einem externen Zusatzgerät (94), insbesondere zum Kalibrieren der Kameraeinrichtung (52) und/oder zum Übertragen von Bildern der Kameraeinrichtung (52) an das Zusatzgerät (94).

## Claims

1. Vehicle washing facility, comprising an entry region (18) for a vehicle (20) to be washed, a camera device (52) having a field of view (58) directed toward the entry region (18), a computing unit (64), and a notification device (44) for providing a notification for a vehicle driver depending on at least one image created by the camera device (52), the vehicle washing facility (10) having a portal (12) on which preferably at least one washing tool (34) is held, **characterized in that** the camera device (52) is positioned on a portal column (28) of the portal (12) laterally with respect to the entry region (18), wherein the field of view (58) being directed from the side toward the entry region (18), and **in that** the notification device (44) is or comprises a display device (46), on which images created by the camera device (52) by the computing unit (64) are displayable in a modified manner, wherein the modification comprises a representation of the image content of the images with a modified perspective and/or a representation of the image content mirrored in the transverse and/or longitudinal direction of the entry region (18).

2. Vehicle washing facility in accordance with Claim 1, **characterized in that** the entry region (18) is delimited by lateral boundaries spaced apart from one another transversely to an entry direction (22) and **in that** at least the boundary of the entry region (18) located closer to the camera device (52) is detectable at least in portions with the field of view (58), preferably **in that** the boundaries are or comprise wheel guide rails (26) for the vehicle (20).

3. Vehicle washing facility in accordance with any one of the preceding Claims, **characterized in that** the camera device (52) is or comprises a mono camera (58) and/or **in that** the camera device (52) is configured to create moving images.

4. Vehicle washing facility in accordance with any one of the preceding Claims, **characterized in that**
the modification additionally comprises at least one of the following:
- a representation of a marking (66) which is perceivable by the vehicle driver in the image, in particular for marking a front boundary or lateral boundaries of the entry region (18); and
- a representation of the entry region (18) and/or of the vehicle (20) or its contour from above between boundaries of the entry region (18).

5. Vehicle washing facility in accordance with any one of the preceding Claims, **characterized in that** the perspective is selected such that lateral boundaries of the entry region (18) are represented on the display device (46) substantially in parallel with side edges of the display device (46) and/or substantially symmetrically to one another.

6. Vehicle washing facility in accordance with any one of the preceding Claims, **characterized in that** images captured by the camera device (52) are evaluable by the computing unit (64), and **in that**, based on the evaluation, at least one of the following is providable by the notification unit (44):
- a notification to the vehicle driver to change an alignment of the vehicle (20) relative to the entry region (18); and
- a notification to the vehicle driver to stop, continue advancing or back up the vehicle (20).

7. Vehicle washing facility in accordance with any one of the preceding Claims, **characterized in that** at least one of the following applies:
- the camera device (52) is arranged on a front side (42) of the portal column (28) that faces the vehicle driver,
- the camera device (52) is arranged below the notification device (44) on the portal (12), or the camera device (52) is arranged above the notification device (44) on the portal (12).

8. Vehicle washing facility in accordance with any one of the preceding Claims, **characterized in that** the notification device (44) is arranged on a portal column (28) of the portal (12).

9. Vehicle washing facility in accordance with Claim 8, **characterized in that** at least one of the following applies:
- the camera device (52) and the notification device (44) are arranged on the same portal column (28);
- the notification device (44) is arranged on a front side (42) of the portal column (28) that faces the vehicle driver,
- the camera device (52) and/or the notification device (44) are arranged at a height of approximately 0.5 m to 3 m above the entry region (18), preferably at a height of approximately 1 m to 2 m.

10. Vehicle washing facility in accordance with any one of the preceding Claims, **characterized in that** the portal column (28) has a housing-like cladding (40) or a cladding (40) which forms a housing (38), and **in that** at least one receptacle for the camera device (52) and/or for the notification device (44) is formed on the portal column (28), wherein preferably at least one transparent cover (50, 54) of the at least one receptacle being aligned or substantially aligned with the cladding (40).

11. Vehicle washing facility in accordance with any one of the preceding Claims, **characterized in that** the vehicle washing facility (10) comprises a cleaning device (70) associated with the camera device (52), preferably **in that** the cleaning device (70) comprises or forms at least one of the following:
- a nozzle device (72), with which the camera device (52) or a cover (54) of the camera device (52) is cleanable by means of compressed gas,
- a wiper device, with which the camera device (52) or a cover (54) of the camera device (52) is cleanable by means of a wiper element; and
- a heating device for heating the camera device (52) or a cover (54) of the camera device (52) in order to remove liquid.

12. Vehicle washing facility in accordance with any one of the preceding Claims, **characterized in that** a cover device (80) is provided with a cover (82) for the camera device (52), which cover (80) is transferable from a closed position covering said camera device to a release position and vice versa, wherein the view of the camera device (52) onto the entry region (18) being released in the release position, preferably **in that** the cover (80) is held on the portal column (28) so as to be displaceable, pivotable or rollable.

13. Vehicle washing facility in accordance with any one of the preceding Claims, **characterized in that** different information are displayable on the display device (46) from different operating modes of the vehicle washing facility (10), wherein the operating modes comprise an entry mode in which, at least in part, images based on images of the camera device (52) are displayable.

14. Vehicle washing facility in accordance with Claim 13, **characterized in that** the vehicle washing facility (10) comprises a sensor device (90) for detecting that a vehicle (20) is driving into the entry region (18), and **in that** the vehicle washing facility (10) is transferable from a standby mode into the entry mode depending on a signal from the sensor device (90), preferably **in that** the camera device (52) comprises or forms the sensor device (90).

15. Vehicle washing facility in accordance with any one of the preceding Claims, **characterized in that** a communication interface (92) is provided for establishing a data connection between the camera device (52) and an external additional device (94), in particular for calibrating the camera device (52) and/or for transmitting images of the camera device (52) to the additional device (94).

## Revendications

1. Installation de lavage de véhicule comprenant une zone d'entrée (18) pour un véhicule à laver (20), un dispositif de caméra (52) avec un champ de vision (58) orienté vers la zone d'entrée (18), une unité de calcul (64) et un dispositif d'indication (44) pour la mise à disposition d'une indication pour un conducteur de véhicule en fonction d'au moins une image créée avec le dispositif de caméra (52), dans lequel l'installation de lavage de véhicule (10) comprend un portique (12) au niveau duquel est maintenu de préférence un outil de lavage (34), **caractérisée en ce que** le dispositif de caméra (52) est positionné de manière décalée latéralement par rapport à la zone d'entrée (18) sur une colonne (28) du portique (12), dans lequel le champ de vision (58) est orientée du côté vers la zone d'entrée (18) et **en ce que** le dispositif d'indication (44) est ou comprend un dispositif d'affichage (46) au niveau duquel des images créées au moyen du dispositif de caméra (52), modifiées par l'unité de calcul (64), peuvent être représentées, dans lequel la modification comprend une représentation du contenu des images avec une perspective modifiée et/ou une représentation du contenu de l'image en miroir dans la direction transversale et/ou dans la direction longitudinale de la zone d'entrée (18).

2. Installation de lavage de véhicule selon la revendication 1, **caractérisée en ce que** la zone d'entrée (18) est délimitée par des délimitations latérales distantes entre elles transversalement par rapport à une direction d'entrée (22) et **en ce que**, avec le champ de vision (58), au moins la délimitation de la zone d'entrée (18) la plus proche du dispositif de caméra (52) peut être détectée, au moins à certains endroits, de préférence **en ce que** les délimitations sont ou comprennent des glissières de guidage des roues (26) pour le véhicule (20).

3. Installation de lavage de véhicule selon l'une des revendications précédentes, **caractérisée en ce que** le dispositif de caméra (52) est ou comprend une mono-caméra (58) et/ou **en ce que** le dispositif de caméra (52) pour la création d'images animées.

4. Installation de lavage de véhicule selon l'une des revendications précédentes, **caractérisée en ce que** la modification comprend en outre au moins un des éléments suivants :
- une représentation d'un marquage (66) dans l'image, perceptible par le conducteur du véhicule plus particulièrement pour le marquage d'une délimitation avant ou de délimitations latérales de la zone d'entrée (18) ;
- une représentation de la zone d'entrée (18) et/ou du véhicule (20) ou de son contour d'en haut entre les délimitations de la zone d'entrée (18).

5. Installation de lavage de véhicule selon l'une des revendications précédentes, **caractérisée en ce que** la perspective est choisie de sorte que les délimitations latérales de la zone d'entrée (18) sont représentées de manière globalement parallèle à des bords latéraux du dispositif d'affichage (46) et/ou de manière globalement symétrique entre eux sur le dispositif d'affichage (46).

6. Installation de lavage de véhicule selon l'une des revendications précédentes, **caractérisée en ce que** les images prises par le dispositif de caméra (52) peuvent être analysées par l'unité de calcul (64) et **en ce que**, sur la base de l'analyse, au moins un des éléments suivants peut être mis à disposition par l'unité d'indication (44) :
- une indication au conducteur du véhicule pour modifier une orientation du véhicule (20) par rapport à la zone d'entrée (18) ; et
- une indication au conducteur du véhicule pour arrêter, avancer plus loin ou reculer le véhicule (20).

7. Installation de lavage de véhicule selon l'une des revendications précédentes, **caractérisée en ce qu'**au moins une des affirmations suivantes est valable :
- le dispositif de caméra (52) est disposé sur une face frontale (42) du colonne de portique (28), orientée vers le conducteur du véhicule ;
- le dispositif de caméra (52) est disposé en dessous du dispositif d'indication (44) sur le portique (12) ou le dispositif de caméra (52) est disposé en dessous du dispositif d'indication (44) sur le portique (12).

8. Installation de lavage de véhicule selon l'une des revendications précédentes, **caractérisée en ce que** le dispositif d'indication (44) est disposé sur une colonne (28) du portique (12).

9. Installation de lavage de véhicule selon la revendication 8, **caractérisée en ce qu'**au moins une des affirmations suivantes est valable :
- le dispositif de caméra (52) et le dispositif d'indication (44) sont disposés sur la même colonne de portique (28) ;
- le dispositif d'indication (44) est disposé sur une face frontale (42) de la colonne de portique (28), orientée vers le conducteur du véhicule ;
- le dispositif de caméra (52) et/ou le dispositif d'indication (44) sont disposés à une hauteur d'environ 0,5 m à 3 m au-dessus de la zone d'entrée (18), de préférence à une hauteur d'environ 1 m à 2 m.

10. Installation de lavage de véhicule selon l'une des revendications précédentes, **caractérisée en ce que** la colonne de portique (28) comprend un carénage (40) de type boîtier ou formant un boîtier (38) et **en ce que**, sur la colonne de portique (28), est prévu au moins un logement pour le dispositif de caméra (52) et/ou pour le dispositif d'indication (44), dans lequel, de préférence au moins un couvercle transparent (50, 54) de l'au moins un logement est en affleurement ou globalement en affleurement avec le carénage (40).

11. Installation de lavage de véhicule selon l'une des revendications précédentes, **caractérisée en ce que** l'installation de lavage de véhicule (10) comprend un dispositif de nettoyage (70) correspondant au dispositif de caméra (52), de préférence **en ce que** le dispositif de nettoyage (70) comprend ou constitue au moins un des éléments suivants :
- un dispositif à buses (72) avec lequel le dispositif de caméra (52) ou un couvercle (54) du dispositif de caméra (52) peut être nettoyé au moyen d'un gaz sous pression ;
- un élément d'essuyage avec lequel le dispositif de caméra (52) ou un couvercle (54) du dispositif de caméra (52) peut être nettoyé au moyen d'un élément d'essuyage ; et
- un dispositif de chauffage pour le chauffage du dispositif de caméra (52) ou d'un couvercle (54) du dispositif de caméra (52) afin d'éliminer les liquides.

12. Installation de lavage de véhicule selon l'une des revendications précédentes, **caractérisée en ce qu'**un dispositif de recouvrement (80), avec un couvercle (82) pour le dispositif de caméra (52), est prévu, ce couvercle (80) pouvant passer d'une position de fermeture recouvrant celui-ci à une position dégagée et inversement, dans lequel, dans la position dégagée, la vision du dispositif de caméra (52) sur la zone d'entrée (18) est dégagée, de préférence **en ce que** le couvercle (80) est maintenu sur la colonne du portique (28) de manière coulissante, pivotante ou roulante.

13. Installation de lavage de véhicule selon l'une des revendications précédentes, **caractérisée en ce que** des informations différentes provenant de différents modes de fonctionnement de l'installation de lavage de véhicule (10) peuvent être représentées sur le dispositif d'affichage (46), dans lequel les modes de fonctionnement comprennent un mode d'entrée dans lequel, au moins partiellement, des images basées sur les images du dispositif de caméra (52) peuvent être représentées.

14. Installation de lavage de véhicule selon la revendication 13, **caractérisée en ce que** l'installation de lavage de véhicule (10) comprend un dispositif de capteur (90) pour la détection qu'un véhicule (20) entre dans la zone d'entrée (18) et **en ce que** l'installation de lavage de véhicule (10) peut passer, en fonction d'un signal du dispositif de capteur (90), d'un mode d'attente au mode d'entrée, de préférence **en ce que** le dispositif de caméra (52) comprend ou constitue le dispositif de capteur (90).

15. Installation de lavage de véhicule selon l'une des revendications précédentes, **caractérisée en ce qu'**une interface de communication (92) est prévue pour l'établissement d'une liaison de données entre le dispositif de caméra (52) et un appareil supplémentaire externe (94), plus particulièrement pour le calibrage du dispositif de caméra (52) et/ou pour la transmission d'images du dispositif de caméra (52) à l'appareil supplémentaire (94).
